# FASCICULE DE BREVET EUROPEEN

(11) **EP 2 928 033 B1**
(45) Date de publication et mention de la délivrance du brevet: **04.08.2021**
(21) Numéro de dépôt: 15161842.8
(22) Date de dépôt: 31.03.2015
(51) Int. Cl.: H02B 3/00, G01R 31/52, G01R 31/54, G01R 31/67, G01R 31/69, G06F 30/18, G06F 30/394, G06F 30/398

(54) **PROCÉDÉ DE RECONSTITUTION D'UN SCHÉMA D'UNE INSTALLATION ÉLECTRIQUE**
VERFAHREN ZUM WIEDERHERSTELLEN EINES SCHEMAS EINER ELEKTRISCHEN ANLAGE
METHOD FOR RECONSTRUCTING A DIAGRAM OF AN ELECTRICAL INSTALLATION

(30) Priorité: 02.04.2014 FR 1452911
(43) Date de publication de la demande: 07.10.2015
(73) Titulaire: Schneider Electric Industries SAS, 92500 Rueil-Malmaison (FR)
(72) Inventeur: Blondel, Charles, 38050 GRENOBLE CEDEX 9 (FR); Gandanegara, Grace, 38050 GRENOBLE CEDEX 9 (FR); Goutay, Roland, 38050 GRENOBLE CEDEX 9 (FR); Herriot, Yann, 38050 GRENOBLE CEDEX 9 (FR)
(74) Mandataire: Brevalex

(56) Documents cités:
- DE-A1- 19 810 115
- US-A- 6 163 144

## Description

### DOMAINE TECHNIQUE

L'invention se situe dans le domaine de la rénovation des installations électriques existantes et concerne plus spécifiquement un procédé de reconstitution d'un schéma d'une installation électrique comportant une pluralité d'appareils électriques agencés dans un tableau électrique, tels que des interrupteurs, des coupe-circuits, des sectionneurs ou des disjoncteurs.

L'invention concerne également un dispositif de reconstitution d'un schéma d'une installation électrique comportant une pluralité d'appareils électriques agencés dans un tableau électrique.

L'invention concerne également un module de test intégrable dans le dispositif selon l'invention, et un programme d'ordinateur mémorisé sur un support d'enregistrement et comportant des instructions qui conduisent le dispositif selon l'invention à mettre en œuvre les étapes du procédé selon selon l'invention.

L'invention s'applique plus particulièrement, mais non exclusivement, à des installations électriques existantes dont le schéma électrique est incomplet ou n'est plus disponible pour effectuer une mise à jour du tableau électrique.

### ÉTAT DE LA TECHNIQUE ANTÉRIEURE

Une difficulté récurrente rencontrée lors de la rénovation ou d'une mise à jour d'une installation électrique, est de pouvoir reconstituer le schéma électrique de l'installation existante dont le schéma est incomplet ou n'est plus disponible. En effet pour des tableaux électriques anciens, datant par exemple de 20 ou 30 ans, le schéma électrique de l'installation est soit inexistant, soit très incomplet du fait qu'il n'ait pas été mis à jour pour tenir compte des modifications des normes de sécurité ou des rajouts d'appareils électrique à l'installation. Or, avant de rénover une installation existante, il est indispensable d'en connaitre le schéma électrique actuel. Le suivi visuel et manuel des fils est, long et risqué, voire impossible, du fait que les fils passent souvent dans des goulottes, derrière des châssis, ou à proximité de pièces nues sous tension. Par ailleurs, du fait de la nécessité de continuité d'exploitation de l'établissement alimenté par l'installation à rénover, il n'est pas toujours possible de couper, même partiellement, le courant électrique pour tester les circuits du tableau électriques et encore moins pour démonter l'armoire électrique de cette installation. Dans une telle situation, l'installateur doit, reconstituer manuellement le schéma électrique de l'armoire sur place, avant de pouvoir la reconstituer dans son atelier.

Les méthodes actuelles utilisées par les installateurs pour reconstituer un schéma électrique consistent à identifier visuellement les câbles reliant les appareils électriques aux composant du tableau électrique, et à vérifier les continuités électriques entre chaque composant de l'armoire avec des testeurs de réseau en injectant un signal dans le circuit et en détectant ce signal par un capteur capacitif sans contact. Un tel testeur est divulgué dans US 6163144 A.

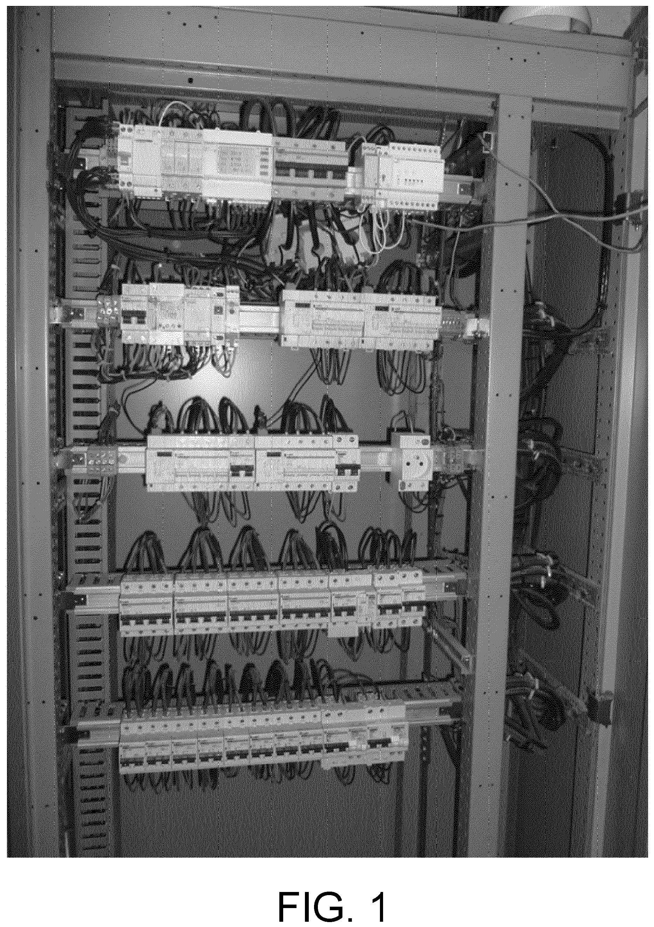

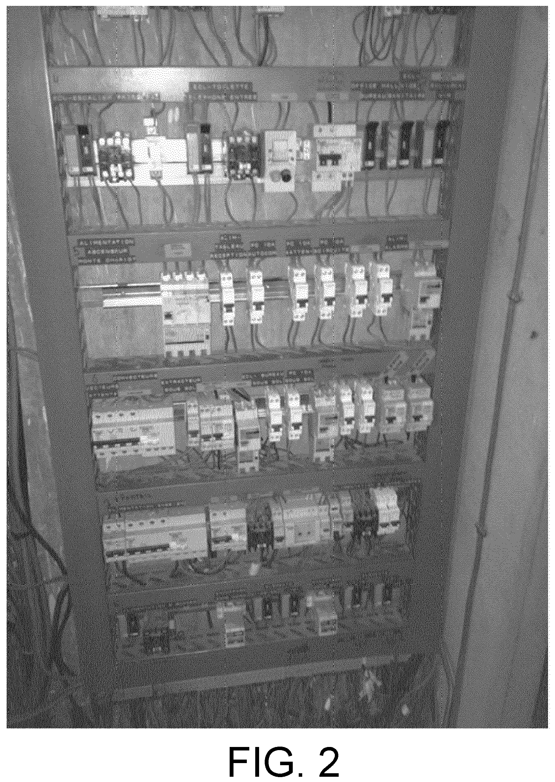

Un problème de ces méthodes provient, d'une part, du fait que l'identification visuelle et manuelle des câbles est difficile, voire impossible, du fait qu'ils sont souvent peu visibles car intégrés dans des goulottes ou torons, ou masqués par des rails, traverses comme cela est illustré par les figures 1 et 2, et d'autre part, du fait que lorsque le courant ne peut pas être interrompu, l'installateur doit travailler à proximité de pièces nues sous tension, à l'intérieur de l'armoire; le port de gant et d'équipement de protection individuelle, qui est alors indispensable, complique considérablement la manipulation des câbles pour « suivre » manuellement les fils et leur identification visuelle.

En outre, pour les raisons indiquées ci-dessus, le risque d'erreur est fortement accru au cours d'une identification visuelle et manuelle. Aussi, lors du remplacement d'une ancienne armoire par une nouvelle, si la réalisation n'est pas conforme, les conséquences peuvent être très lourdes au moment de la remise sous tension (court circuits, destruction de matériel...). Enfin, avec ces méthodes, il a été constaté que le temps moyen nécessaire pour une armoire d'une cinquantaine d'appareils est de l'ordre de 2 hommes-jour.

Par ailleurs, la vérification des continuités électriques entre chaque composant de l'armoire avec testeur capacitif permet uniquement de vérifier la présence ou l'absence d'un lien électrique entre A et B sans indiquer les positions relatives des appareils dans l'installation électrique. En plus, le signal des testeurs doit être réglé très finement pour permettre un résultat, car s'il est trop fort, il reboucle dans l'ensemble du tableau et ne permet donc pas au capteur de le discriminer entre plusieurs départs proches, et s'il est trop faible, il ne sera pas détecté. De ce fait, Il faut faire autant de tests que de liaisons équipotentielles possibles, ce qui peut rapidement devenir impossible à réaliser. Ainsi par exemple pour 50 appareils présents dans un tableau, il faut faire théoriquement 50x49 = 2450 mesures.

Ce travail peut être très long, fastidieux et couteux.

Un but de l'invention est de pallier les inconvénients décrits ci-dessus.

### EXPOSÉ DE L'INVENTION

Le but de l'invention est atteint au moyen d'un procédé et d'un dispositif permettant de reconstruire automatiquement un schéma d'une installation électrique comportant une pluralité d'appareils agencés dans un tableau électrique relié à une source d'alimentation.

Le procédé selon l'invention comporte les étapes suivantes:
identifier automatiquement les appareils électriques de l'installation câblés par reconnaissance d'image à partir d'une photo du tableau électrique, déterminer automatiquement au moyen d'un module de calcul l'arborescence des liaisons électriques des appareils identifiés et la position de chaque appareil dans ladite arborescence,
déduire un schéma électrique de l'installation à partir de l'arborescence des liaisons électriques et de la position de chaque appareil dans ladite arborescence,
la détermination de l'arborescence des liaisons électriques et de la position de chaque appareil dans ladite arborescence comportant les étapes suivantes:
   repérer au moins une borne de sortie et au moins une borne d'entrée (50) sur chaque appareil identifié,
   vérifier la continuité électrique entre la borne de sortie du premier appareil identifié et la borne d'entrée du deuxième appareil identifié par une détection d'un courant injecté sur la borne de sortie du premier appareil.
   déterminer la position relative du deuxième appareil par rapport au premier appareil par une mesure de courant en un point de test situé en aval de la borne de sortie (48) du premier appareil.

Le procédé selon l'invention est mis en œuvre par un dispositif de reconstitution d'un schéma d'une installation électrique comportant une pluralité d'appareils électriques reliés à une source d'alimentation via des éléments de protection agencés dans un tableau électrique, caractérisé en ce qu'il comporte :
Une unité de capture d'image,
une unité de traitement d'image adaptée pour identifier les appareils électriques de l'installation câblés à partir d'une image du tableau électrique fournie par l'unité de capture d'image,
un module de test adapté pour vérifier la continuité électrique entre la sortie d'un premier appareil identifié et l'entrée d'un deuxième appareil identifié et pour déterminer la position relative du deuxième appareil par rapport premier appareil.
un module de calcul adapté pour déterminer automatiquement l'arborescence des liaisons électriques des appareils identifiés et la position de chaque appareil dans ladite arborescence et pour générer un schéma électrique de l'installation à partir de l'arborescence déterminée,
et en ce que
le module de test comporte un générateur de courant apte à injecter un courant continu Idc ou un courant alternatif lac sur la borne de sortie du premier appareil identifié sur le tableau électrique, un voltmètre, un premier ampèremètre, et un deuxième ampèremètre.

Le module de test est intégrable dans un dispositif de reconstitution d'un schéma d'une installation électrique et comporte un générateur de courant apte à injecter un courant électrique continu Idc ou alternatif lac sur la borne de sortie du premier appareil identifié sur le tableau électrique, un voltmètre, un premier ampèremètre, et un deuxième ampèremètre.

Ainsi, grâce à l'invention, il est possible de reconstruire automatiquement le schéma d'une installation électrique dont le schéma initial est perdu ou incomplet en un temps réduit sans interruption de l'alimentation électrique des appareils.

Selon l'invention, la continuité électrique entre la borne de sortie du premier appareil identifié et la borne d'entrée du deuxième appareil identifié est vérifiée par une détection d'un courant injecté sur la borne de sortie du premier appareil et la position relative du deuxième appareil par rapport au premier appareil est déterminée par une mesure de courant en un point de test situé en aval de ladite borne de sortie du premier appareil.

L'invention permet ainsi de détecter, non seulement les liaisons électriques entre les appareils du tableau électrique, mais permet également de repérer la position relative des appareils reliés dans l'installation sans suivre manuellement les fils, mais seulement en injectant un courant continu ou un courant alternatif sur la borne de sortie d'un premier appareil identifié et en effectuant une mesure de courant au point de test situé en aval de la borne de sortie de ce premier appareil.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:
- les figures 1 et 2 représentent des images de tableaux électriques d'une installation existante;
- la figure 3 représente schématiquement un dispositif pour mettre en œuvre le procédé selon l'invention.
- la figure 4 illustre schématiquement une étape de test réalisée selon le procédé de l'invention;
- la figure 5 illustre schématiquement un premier exemple de mesure selon l'invention;
- la figure 6 illustre schématiquement un deuxième exemple de mesure selon l'invention;
- la figure 7 illustre schématiquement un troisième exemple de mesure selon l'invention;
- La figures 8 illustre schématiquement les étapes d'un exemple d'algorithme permettant d'obtenir un schéma électrique d'un tableau à partir de tests effectués par un opérateur;
- les figures 9 à 11 illustrent schématiquement trois séries de tests à effectuer pour reconstituer le schéma électrique d'un tableau électrique;

### EXPOSÉ DÉTAILLÉ DE MODES DE RÉALISATION PARTICULIERS

L'invention sera décrite dans le cadre d'une application de rénovation d'une installation électrique existante.

Les figures 1 et 2 représentent respectivement des photos des tableaux électriques de deux installations électriques à rénover comportant chacune des appareils électriques tels que des interrupteurs, des coupe-circuits, des sectionneurs ou des disjoncteurs, reliés par des câbles dissimulés derrière des rails dans des goulottes. Pour reconstituer les schémas électriques de ces installations, il est nécessaire d'effectuer des tests pour vérifier la continuité électrique et le sens amont/aval entre les connexions électriques des appareils du tableau.

A cet effet, une première phase du procédé selon l'invention consiste à identifier et à répertorier les appareils électriques câblés à partir des photos des figures 1 et 2 afin de reconnaitre un à un les appareils du tableau électrique. L'identification de ces appareils électriques peut être réalisée manuellement. Cependant l'identification manuelle des différents appareils peut s'avérer fastidieuse. Aussi, l'identification est réalisée automatiquement à partir des photos des tableaux électriques par un logiciel de reconnaissance d'image qui fournit à l'opérateur un schéma général du tableau électrique montrant les différents appareils numérotés avec leurs entrées et sorties respectives. Le traitement des photos du tableau électrique fournit également le type et la marque de chaque appareil.

Une deuxième phase du procédé consiste à effectuer des mesures pour tester la continuité et la position amont/aval entre la sortie d'un appareil, et l'entrée d'un autre appareil. L'ordre et le nombre des tests à effectuer sont calculés par une application informatique appelée (appelée App_RecoSchema dans la suite de la description) qui s'appuie sur l'analyse des photos du tableau électrique. Pour tous les tests, App_RecoSchema désigne un point de référence (appelé REF dans la suite de la description) représentant une connexion de sortie d'un appareil, et un point de mesure (appelé MES dans la suite de la description) représentant une connexion d'entrée d'un appareil. App_RecoSchema propose à l'opérateur, via une interface homme-machine, des points de référence et de mesure à tester.

L'utilisateur effectue les tests demandés par App_RecoSchema qui reconstituera le schéma électrique à partir des résultats de tests jusqu'à ce que tous les appareils soient correctement situés dans le schéma.

App_RecoSchema coopère avec un module de traitement d'image adapté pour identifier les appareils électriques de l'installation câblés à partir des photos de chaque rangée du tableau électrique, un module de test adapté pour vérifier la continuité électrique entre la sortie d'un premier appareil identifié et l'entrée d'un deuxième appareil identifié et pour déterminer la position relative du deuxième appareil par rapport premier appareil.

Pour effectuer les tests, l'opérateur télécharge App_RecoSchema sur une tablette ou sur un ordinateur portable et prends une photo de chaque rangée du tableau électrique. Les photos sont analysées par le module de traitement d'image. Celle-ci renvoie un panorama du tableau électrique, avec les appareils détourés et numérotés de 1 à N. L'utilisateur vérifie que tous les appareils sont présents, Il peut alors ajouter « manuellement » un appareil manquant, et changer ou renseigner les références ou les propriétés des appareils. Un code couleur peut témoigner du niveau de confiance du logiciel dans la détermination automatique des appareils à partir de la photo, et donc orienter l'utilisateur dans ses vérifications. Une fois l'architecture photo du tableau validée, un module de calcul de App_RecoSchema crée un plan des appareils, en faisant apparaitre la référence et les entrées-sorties pour chaque appareil. Avant de lancer les tests, App_RecoSchema demande à l'utilisateur s'il peut rentrer au préalable des informations qui pourraient être facile à déterminer visuellement, telles que par exemple, Disjoncteur de tête, appareils connecté sur un même peigne, etc.

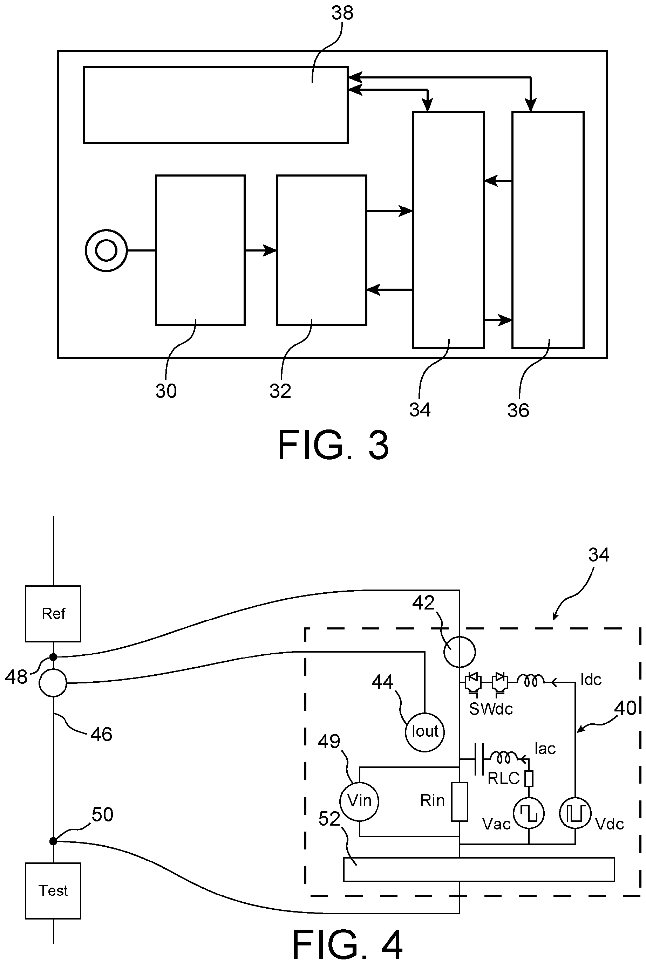

La figure 3 représente schématiquement un dispositif pour mettre en œuvre le procédé selon l'invention.

Ce dispositif comporte une unité de capture d'image 30, une unité de traitement d'image 32 adaptée pour identifier les appareils électriques de l'installation câblés à partir d'une image du tableau électrique, un module de test 34 adapté pour vérifier la continuité électrique entre la sortie d'un premier appareil identifié et l'entrée d'un deuxième appareil identifié et pour déterminer la position relative du deuxième appareil par rapport au premier appareil, un module de calcul 36 adapté pour déterminer automatiquement l'arborescence des liaisons électriques des appareils identifiés et la position de chaque appareil dans ladite arborescence et pour générer un schéma électrique de l'installation à partir de l'arborescence déterminée.

La continuité électrique entre la sortie d'un premier appareil et l'entrée d'un deuxième appareil est vérifiée au moyen d'un premier ampèremètre 42 qui détecte la présence d'un courant continu ou alternatif à la sortie du module de test 34, et la position relative du deuxième appareil par rapport au premier appareil est déterminée au moyen d'un deuxième ampèremètre 44 qui détecte la présence d'un courant continu ou alternatif en un point de test 46 situé en aval du premier appareil.

Le dispositif selon l'invention comporte en outre un module de communication 38 destiné à transmettre l'arborescence générée à une unité de traitement distante comprenant un programme informatique apte à reconstituer le schéma électrique de l'installation.

Notons que ladite unité de traitement peut être intégrée dans le dispositif selon l'invention. Dans ce cas, la reconstitution du schéma électrique de l'installation à partir de l'arborescence des liaisons électriques des appareils identifiés et la position de chaque appareil dans ladite arborescence peut être réalisée localement par un installateur sans avoir à transmettre l'arborescence à l'unité de traitement distante. Le schéma électrique reconstitué peut ensuite être transmis à une unité de production pour fabriquer ou compléter le tableau électrique de l'installation.

Comme cela est illustré par la figure 4, le module de test 34 comporte un générateur de courant 40 apte à délivrer un courant continu Idc ou un courant alternatif lac, le premier ampèremètre 42 qui détecte la présence d'un courant continu ou alternatif à la sortie du module de test 34, le deuxième ampèremètre 44 pour mesurer le courant électrique au point de test 46, et un voltmètre 49 pour mesurer la tension entre le point de test 46 et la borne d'entrée 50 du deuxième appareil identifié.

Dans un mode particulier de réalisation de l'invention, l'unité de capture d'image 30, l'unité de traitement d'image 32, le module de test 34, le module de calcul 36 et le module de communication 38 sont intégrés à une tablette comportant en outre une mémoire comprenant une interface homme machine (IHM) destinée à guider l'installateur dans l'ordre des mesures à effectuer, afin de reconstituer automatiquement le schéma, en limitant le nombre de mesures nécessaires.

En fonctionnement, App_RecoSchema propose à l'opérateur, via l'IHM, une série de tests à effectuer en indiquant le point REF 48 correspondant à la borne de sortie de l'appareil sur laquelle l'opérateur fixe une pince de test du testeur, les points MES 50 correspondant à une série de bornes d'entrée d'appareils, sur lesquelles l'opérateur appliquera la pointe de touche mesure du testeur. Les résultats des mesures s'affichent sur une interface 52. L'utilisateur renseigne directement le point de mesure concerné sur la photo. Une fois la série de tests complétée, App_RecoSchema envoie le résultat au Cloud SE qui délivre en retour le schéma pour chaque phase. En cas d'absence de connexion internet, les résultats sont stockés dans une mémoire (interne ou externe).

Après analyse, l'opérateur superpose le schéma avec la photo du tableau pour détecter d'éventuelles anomalies puis valide le schéma qui peut être transmis au client via internet.

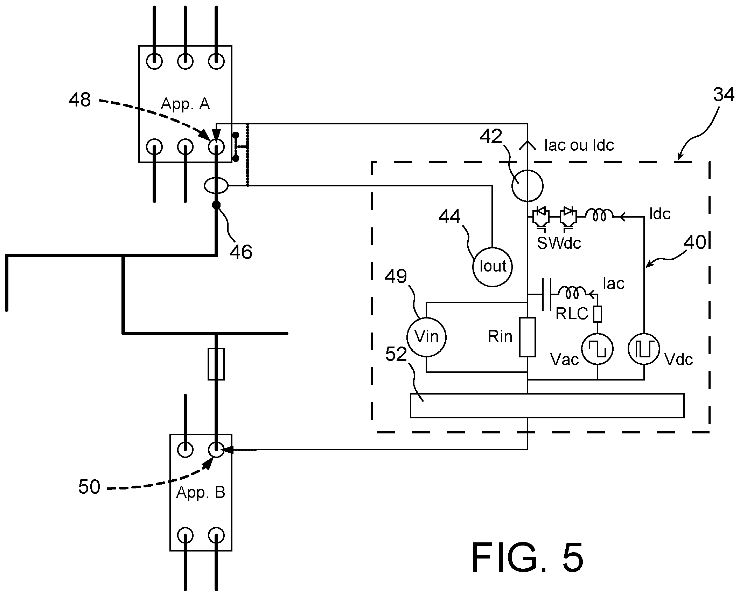

La figure 5 illustre un premier exemple d'utilisation du module de test 34 permettant à l'opérateur de détecter une continuité électrique entre la sortie 46 d'un premier appareil identifié AppA et l'entrée 50 d'un deuxième appareil identifié AppB et de vérifier si le deuxième appareil identifié AppB est en aval du premier appareil identifié AppA.

A partir de l'une des photos des figures 1 ou 2, App_RecoSchema fournit un schéma, qui s'affiche sur l'écran de la tablette ou de l'ordinateur de l'opérateur, indiquant le point REF 48 sur App A, le point MES 50 sur App B, et le point de test 46 situé en aval du point REF 48. Pour vérifier la continuité électrique entre le point REF 48 et le point MES 50, l'opérateur effectue les opérations suivantes :
- il fixe un contact de test sur la borne REF48, une pince de test sur le point REF 46 et applique la pointe de touche MES sur le point MES 50.

Une mesure de tension est réalisée par le voltmètre 49.Cette mesure permet de constater immédiatement si le point REF 48 et le point MES 50 sont situés sur deux phases différentes (220V ou 400V). Si c'est le cas, il n'est pas nécessaire d'injecter un courant sur la borne REF 48.

Par contre, si le voltmètre 49 n'indique aucune une tension, un courant Idc est alors injecté sur la borne REF de sortie du premier appareil.

Si aucun courant n'est détecté à la sortie du module de test 34 par l'ampèremètre 42, cela signifie que la borne REF 48 de sortie du premier appareil et la borne MES 50 d'entrée du deuxième appareil sont sur des lignes électriques différentes et qu'il n'y a pas de continuité électrique entre le premier appareil et le deuxième appareil.

Par contre, si la borne REF 48 et la borne MES 50 sont sur la même ligne électrique, l'opérateur vérifie qu'il y a présence du courant au point 46 en aval de la borne REF 48.

S'il y a un courant au point 46, alors la borne MES 50 est en aval de la borne REF 48.

S'il n'y a pas de courant au point 46, alors la borne MES 50 n'est pas en aval de la borne REF 48.

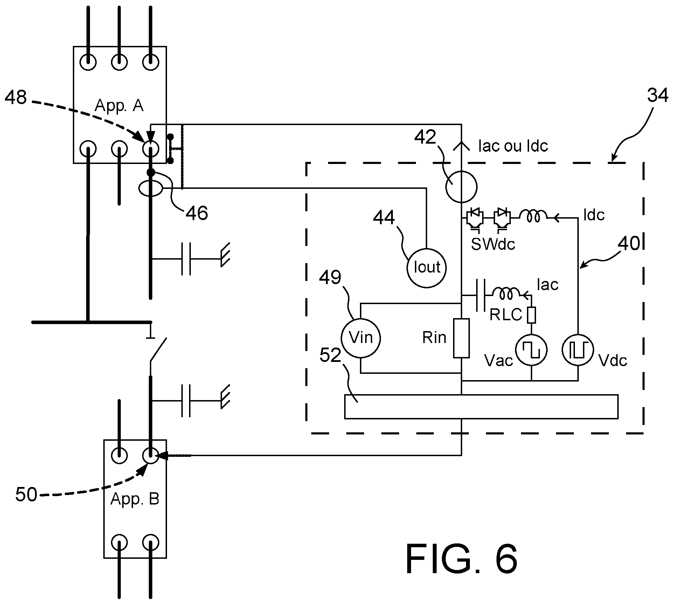

La figure 6 illustre un deuxième exemple d'utilisation du module de test 34 permettant à l'opérateur de conclure que le point MES 50 n'est pas connecté au point REF 48.

Dans cet exemple, du fait que AppB et AppA sont déconnectés, et du fait de la présence de condensateurs de filtrage, l'opérateur injecte avec succès un courant alternatif lac et mesure le courant au point de test 46.

Si l'ampèremètre indique ce courant sur lout, l'opérateur considère le cas où un courant peut passer par des capacités de filtrage à la terre, et pour s'en assurer, il ferme l'interrupteur SWdc, injecte un courant continu Idc au point REF 48, et mesure un courant lout au point 46. Si le voltmètre 49 indique une tension qui augmente avec le passage du courant, l'opérateur conclut que le courant alternatif lac circulait effectivement via les capacités de filtrage à la terre et qu'il n'y a pas de continuité électrique entre les points MES et REF.

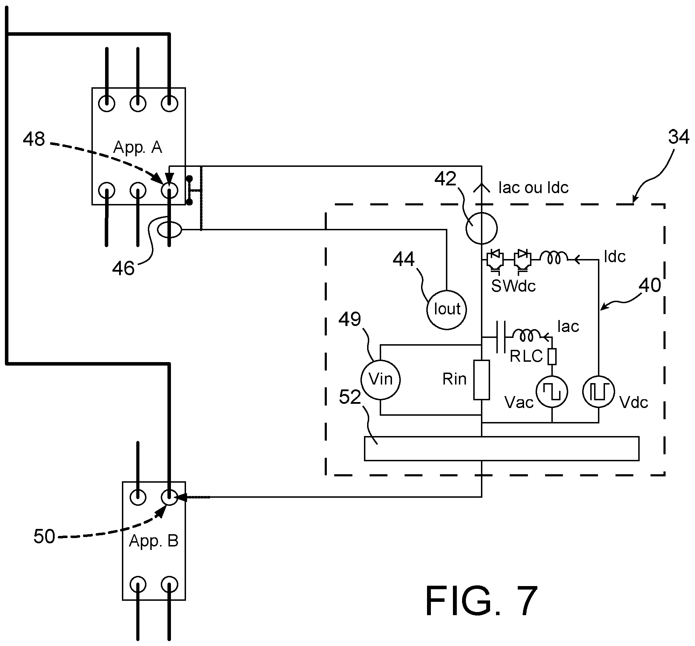

La figure 7 illustre un troisième exemple d'utilisation du module de test 34 permettant à l'opérateur de détecter une continuité électrique entre le point REF 48 et le point MES 50 et de conclure que le point MES 50 n'est pas en aval du point REF 48.

Dans cet exemple, le voltmètre 49 n'indique aucune tension Vin.

L'opérateur injecte avec succès un courant alternatif lac et ne détecte aucun courant lout au point 46. Il conclut qu'il y a peut être continuité électrique entre les points REF 48 et le point MES 50, mais ce point MES 50 n'est peut être pas en aval du point REF48. Pour s'en assurer, il ferme l'interrupteur SWdc, injecte avec succès un courant continu Idc au point REF48. Si le voltmètre 49 n'indique pas une tension qui augmente avec le passage du courant, l'opérateur conclut qu'il n'y a pas de condensateurs de filtrages et qu'il y a continuité entre les points REF 48 et MES 50 et que le point MES 50 n'est pas en aval du point REF 48.

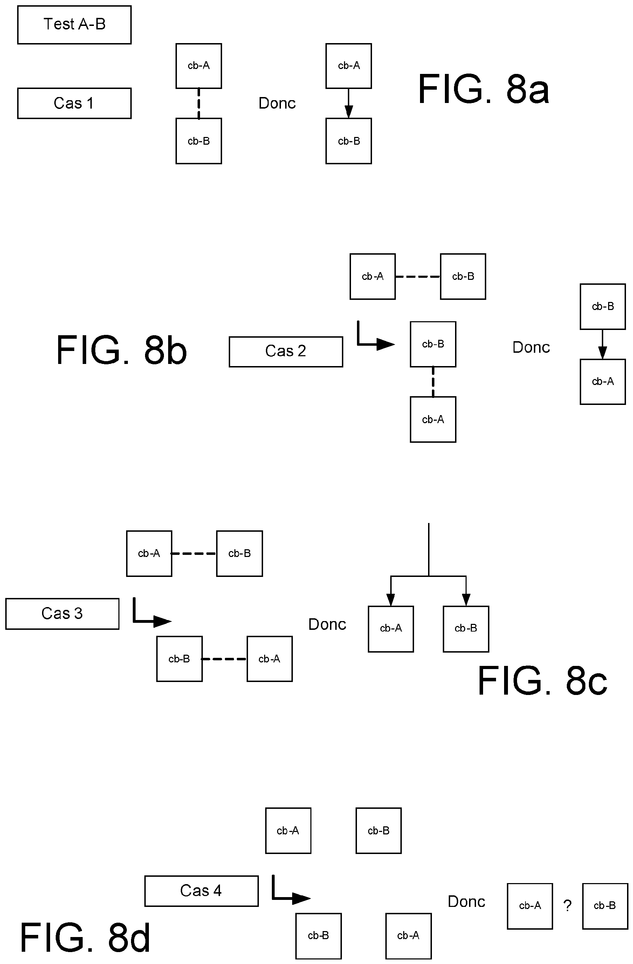

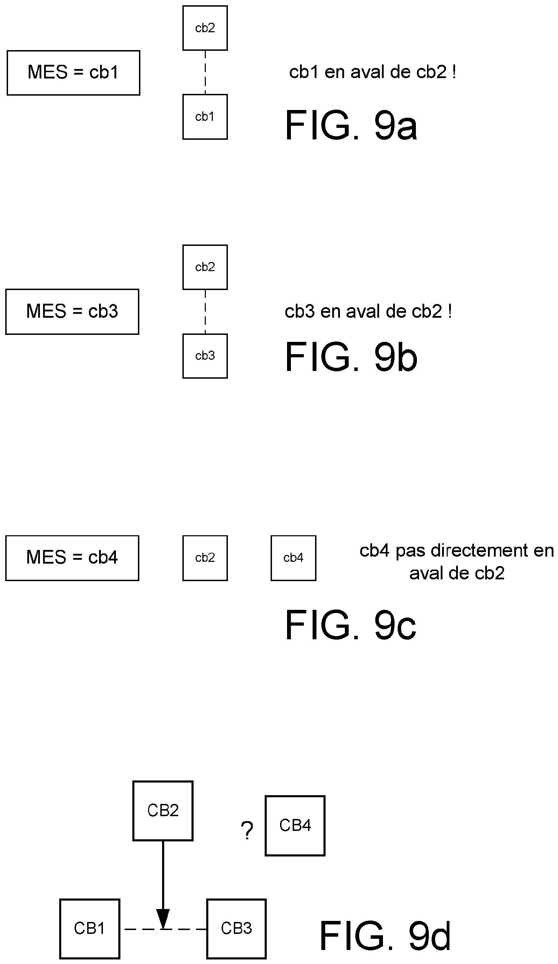

Les figures 8 et 9 illustrent schématiquement les étapes d'un exemple d'algorithme permettant d'obtenir un schéma électrique d'un tableau à partir de tests effectués par un opérateur.

L'algorithme se déroule en distinguant quatre cas différents:
Cas 1 : B est en aval de A (fig. 8a)
   - On test que l'entrée de B est connectée en aval à la sortie de A. La position de B en aval de A dans le schéma est directement validée.
Cas 2: A est en aval de B (fig. 8b) :
   - On test que l'entrée de B est connectée à la sortie de A, mais n'est pas en aval de A. En cas d'incertitude, il faut donc réaliser le test B-A. qui consiste à tester que l'entrée de A est connectée en aval à la sortie de B. La position de A en aval de B dans le schéma est alors directement validée.
Cas 3 : A et B sont connectés en parallèles (ni aval, ni amont) (fig. 8c) :
   - On test que l'entrée de B est connectée à la sortie de A, mais n'est pas en aval de A. En cas d'incertitude, il faut donc réaliser le test B-A qui consiste à tester que l'entrée de A est connectée à la sortie de B, mais n'est pas en aval de B.
   - On conclut que A et B sont en parallèles.
Cas 4 : A et B ne sont pas en liaison électrique (fig. 8d):
   - On test que l'entrée de B n'est pas connectée à la sortie de A. En cas d'incertitude, il faut réaliser le test B-A qui consiste à tester que l'entrée de A n'est pas connectée à la sortie de B.
   - On conclut qu'il n'y a pas de lien direct entre A et B. Soit un appareil en série bloque le courant, soit ils n'appartiennent pas au même circuit.

La figure 9 illustre schématiquement trois séries de tests permettant reconstruire le schéma électrique d'un tableau comportant quatre disjoncteurs CB1, CB2, CB2, et CB4 identifiés par le procédé selon l'invention. Dans cet exemple, le disjoncteur CB1 est ouvert.

Dans la première série de tests on considère que le point REF est CB2, et on considère que le point MES est successivement CB1, CB3 et CB4

Du premier test de cette première série (fig. 9a) (MES=CB1), on conclut que CB1 et en aval de CB2.

Du deuxième test de cette première série (fig. 9b) (MES=CB3), on conclut que CB3 et en aval de CB2.

Du troisième test de cette première série (fig. 9c) (MES=CB4), on conclut que CB4 n'a pas une liaison électrique avec CB2.

Le schéma résultant est donné par la figure 9d.

Dans la deuxième série de tests on considère que le point REF est CB1, et on considère que le point MES est successivement CB3 et CB4

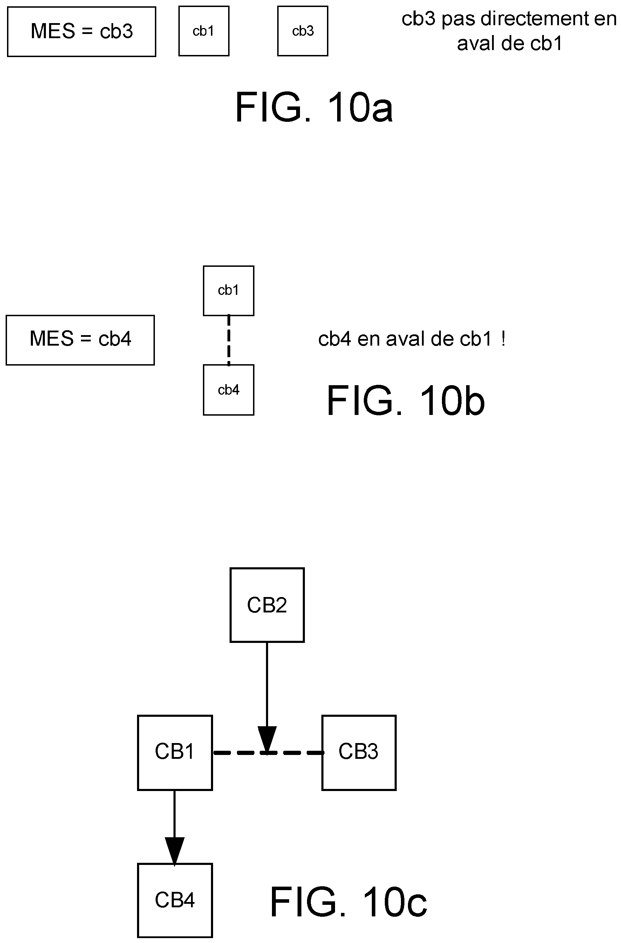

Du premier test de cette deuxième série (fig. 10a) (MES=CB3), on conclut que CB3 n'est pas directement en aval de CB1.

Du deuxième test de cette deuxième série (fig. 10b) (MES=CB4), on conclut que CB4 et en aval de CB1.

Le schéma résultant est donné par la figure 10c.

Dans la troisième série de tests on considère que le point REF est CB3, et que le point MES est CB1.

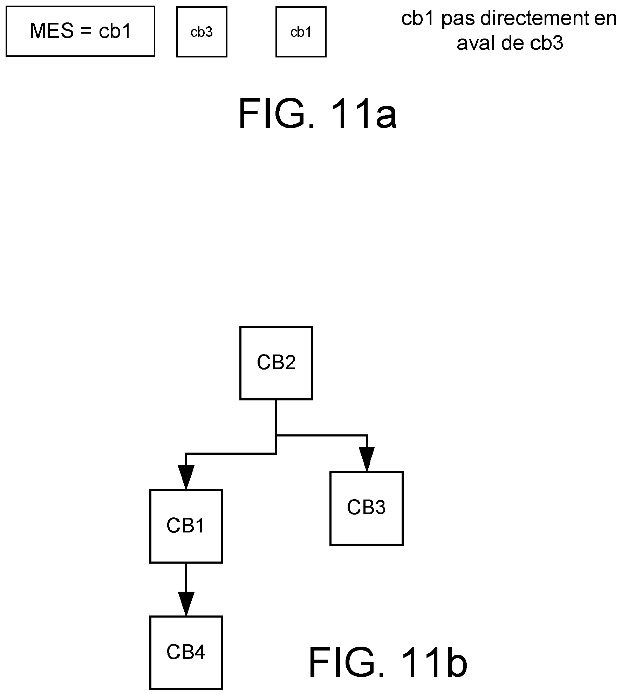

De l'unique test de cette troisième série (fig. 11a) (MES=CB1), on conclut que CB1 n'est pas directement en aval de CB3.

Suite au test 10a et 11a, on conclut que CB1 et CB3 sont en parallèles.

Le schéma électrique final qui résulte des trois séries de tests est donné par la figure 11b.

On constate que sur les douze tests possibles, six tests étaient suffisants, avec trois opérations de déplacement du point fixe REF.

Le dispositif selon l'invention comporte en outre un module de communication 38 destiné à transmettre l'arborescence générée à une unité de traitement distante comprenant un programme informatique apte à reconstituer le schéma électrique de l'installation.

Notons que ladite unité de traitement peut être intégrée dans le dispositif selon l'invention. Dans ce cas, la reconstitution du schéma électrique de l'installation à partir de l'arborescence des liaisons électriques des appareils identifiés et la position de chaque appareil dans ladite arborescence peut être réalisée localement par un installateur sans avoir à transmettre l'arborescence à l'unité de traitement distante. Le schéma électrique reconstitué peut ensuite être transmis à une unité de production pour fabriquer ou compléter le tableau électrique de l'installation.

Dans un mode particulier de réalisation de l'invention, l'unité de capture d'image 30, l'unité de traitement d'image 32, le module de test 34, le module de calcul 36 et le module de communication 38 sont intégré à une tablette comportant en outre une mémoire comprenant une interface homme machine (IHM) destinée à guider l'installateur dans l'ordre des mesures à effectuer, afin de reconstituer automatiquement le schéma, en limitant le nombre de mesures nécessaires.

Le procédé selon l'invention permet ainsi de réduire notablement le temps nécessaire pour réaliser un schéma électrique d'un tableau existant tout en supprimant les erreurs de prises de note manuellement.

## Revendications

1. Procédé de reconstitution d'un schéma d'une installation électrique comportant une pluralité d'appareils électriques reliés à une source d'alimentation via des éléments de protection agencés dans un tableau électrique, **caractérisé en ce qu'**il comporte les étapes suivantes:
Identifier automatiquement les appareils électriques de l'installation câblés par reconnaissance d'image à partir d'une photo du tableau électrique,
déterminer automatiquement au moyen d'un module de calcul (36) l'arborescence des liaisons électriques des appareils identifiés et la position de chaque appareil dans ladite arborescence,
déduire un schéma électrique de l'installation à partir de l'arborescence des liaisons électriques et de la position de chaque appareil dans ladite arborescence,
la détermination de l'arborescence des liaisons électriques et de la position de chaque appareil dans ladite arborescence comportant les étapes suivantes:
repérer au moins une borne de sortie (48) et au moins une borne d'entrée (50) sur chaque appareil identifié,
vérifier la continuité électrique entre la borne de sortie (48) du premier appareil identifié et la borne d'entrée (50) du deuxième appareil identifié par une détection d'un courant injecté sur la borne de sortie (48) du premier appareil.
déterminer la position relative du deuxième appareil par rapport au premier appareil par une mesure de courant en un point de test situé en aval de la borne de sortie (48) du premier appareil.

2. Dispositif de reconstitution d'un schéma d'une installation électrique comportant une pluralité d'appareils électriques reliés à une source d'alimentation via des éléments de protection agencés dans un tableau électrique, **caractérisé en ce qu'**il comporte :
Une unité de capture d'image (30),
une unité de traitement d'image (32) adaptée pour identifier les appareils électriques de l'installation câblés à partir d'une image du tableau électrique fournie par l'unité de capture d'image (30),
un module de test (34) adapté pour vérifier la continuité électrique entre la sortie d'un premier appareil identifié et l'entrée d'un deuxième appareil identifié et pour déterminer la position relative du deuxième appareil par rapport premier appareil.
un module de calcul (36) adapté pour déterminer automatiquement l'arborescence des liaisons électriques des appareils identifiés et la position de chaque appareil dans ladite arborescence et pour générer un schéma électrique de l'installation à partir de l'arborescence déterminée,
et **en ce que** le module de test (34) comporte un générateur de courant apte à injecter un courant continu Idc ou un courant alternatif lac sur la borne de sortie (48) du premier appareil identifié sur le tableau électrique, un voltmètre (49), un premier ampèremètre (42), et un deuxième ampèremètre (44).

3. Module de test (34) adapté pour vérifier la continuité électrique entre une sortie d'un premier appareil identifié et une entrée d'un deuxième appareil identifié pour déterminer la position relative du deuxième appareil par rapport au premier appareil dans une installation électrique comportant une pluralité d'appareils électriques reliés à une source d'alimentation via des éléments de protection agencés dans un tableau électrique, ledit module de test étant intégrable dans un dispositif de reconstitution d'un schéma d'une installation électrique selon la revendication 2, le module de test comportant un générateur de courant (40) apte à injecter un courant électrique continu Idc ou alternatif lac sur la borne de sortie (48) du premier appareil identifié sur le tableau électrique, un voltmètre (49) apte à mesurer la tension entre un point de test (46) situé en aval du premier appareil et la borne d'entrée (50) du deuxième appareil identifié, un premier ampèremètre (42) apte à détecter la présence d'un courant continu ou alternatif à la sortie du module de test, et un deuxième ampèremètre (44) apte à détecter la présence d'un courant continu ou alternatif au point de test (46).

4. Dispositif selon la revendication 2 **caractérisé en ce qu'**il est constitué d'une tablette comportant en plus un module de communication (38) destiné à transmettre l'arborescence générée à une unité de traitement comprenant un programme informatique apte à reconstituer le schéma électrique de l'installation, la tablette comprenant en plus une mémoire comprenant un programme informatique comportant des instructions pour appliquer les étapes du procédé selon la revendication 1.

5. Programme d'ordinateur mémorisé sur un support d'enregistrement et comportant des instructions qui conduisent le dispositif de la revendication 2 à mettre en œuvre les étapes du procédé selon la revendication 1.

## Patentansprüche

1. Verfahren zur Rekonstruktion eines Schaltplans einer elektrischen Anlage mit einer Vielzahl von elektrischen Geräten, die über in einem elektrischen Verteiler angeordnete Schutzelemente mit einer Stromquelle verbunden sind,
**dadurch gekennzeichnet, dass** es die nachstehenden Schritte umfasst:
automatisches Identifizieren der verdrahteten, elektrischen Geräte der Anlage durch Bilderkennung anhand eines Fotos des elektrischen Verteilers,
automatisches Bestimmen der Baumstruktur der elektrischen Verbindungen der identifizierten Geräte und der Position jedes Geräts in dieser Baumstruktur mittels eines Rechenmoduls (36),
Ableiten eines Schaltplans der Anlage aus der Baumstruktur der elektrischen Verbindungen und der Position jedes Geräts in dieser Baumstruktur,
wobei das Bestimmen der Baumstruktur der elektrischen Verbindungen und der Position jedes Geräts in dieser Baumstruktur die nachstehenden Schritte umfasst:
Auffinden von zumindest einem Ausgangsanschluss (48) und zumindest einem Eingangsanschluss (50) an jedem identifizierten Gerät,
Überprüfen des elektrischen Durchgangs zwischen dem Ausgangsanschluss (48) des identifizierten ersten Geräts und dem Eingangsanschluss (50) des identifizierten zweiten Geräts durch Erfassen eines am Ausgangsanschluss (48) des ersten Geräts eingespeisten Stroms,
Bestimmen der relativen Position des zweiten Geräts in Bezug auf das erste Gerät durch eine Strommessung an einem Testpunkt, welcher dem Ausgangsanschluss (48) des ersten Geräts nachgelagert ist.

2. Vorrichtung zur Rekonstruktion eines Schaltplans einer elektrischen Anlage mit einer Vielzahl von elektrischen Geräten, die über in einem elektrischen Verteiler angeordnete Schutzelemente mit einer Stromquelle verbunden sind, **dadurch gekennzeichnet, dass** sie enthält:
eine Bildaufnahmeeinheit (30),
eine Bildverarbeitungseinheit (32), die dazu geeignet ist, die verdrahteten, elektrischen Geräte der Anlage anhand eines Bildes des elektrischen Verteilers zu identifizieren, das von der Bildaufnahmeeinheit (30) bereitgestellt wird,
ein Testmodul (34), das dazu geeignet ist, den elektrischen Durchgang zwischen dem Ausgang eines identifizierten ersten Geräts und dem Eingang eines identifizierten zweiten Geräts zu überprüfen und die relative Position des zweiten Geräts in Bezug auf das erste Gerät zu bestimmen,
ein Rechenmodul (36), das dazu geeignet ist, die Baumstruktur der elektrischen Verbindungen der identifizierten Geräte und die Position jedes Geräts in dieser Baumstruktur automatisch zu bestimmen und einen Schaltplan der Anlage anhand der bestimmten Baumstruktur zu erstellen,
und dass das Testmodul (34) einen Stromgenerator enthält, der dazu geeignet ist, einen Gleichstrom Idc bzw. einen Wechselstrom lac am Ausgangsanschluss (48) des identifizierten ersten Geräts am elektrischen Verteiler einzuspeisen, sowie einen Spannungsmesser (49), einen ersten Strommesser (42) und einen zweiten Strommesser (44).

3. Testmodul (34), das dazu geeignet ist, den elektrischen Durchgang zwischen einem Ausgang eines identifizierten ersten Geräts und dem Eingang eines identifizierten zweiten Geräts zu überprüfen, um die relative Position des zweiten Geräts in Bezug auf das erste Gerät in einer elektrischen Anlage zu bestimmen, die eine Vielzahl von elektrischen Geräten enthält, die über in einem elektrischen Verteiler angeordnete Schutzelemente mit einer Stromquelle verbunden sind, wobei das Testmodul in eine Vorrichtung zur Rekonstruktion eines Schaltplans einer elektrischen Anlage nach Anspruch 2 integrierbar ist, wobei das Testmodul einen Stromgenerator (40) enthält, der dazu geeignet ist, einen Gleichstrom Idc bzw. einen Wechselstrom lac am Ausgangsanschluss (48) des identifizierten ersten Geräts am elektrischen Verteiler einzuspeisen, sowie einen Spannungsmesser (49), der dazu geeignet ist, die Spannung zwischen einem dem ersten Gerät nachgelagerten Testpunkt (46) und dem Eingangsanschluss (50) des identifizierten zweiten Geräts zu messen, einen ersten Strommesser (42), der dazu geeignet ist, das Vorliegen eines Gleich- bzw. Wechselstroms am Ausgang des Testmoduls zu erfassen, und einen zweiten Strommesser (44), der dazu geeignet ist, das Vorliegen eines Gleich- bzw. Wechselstroms am Testpunkt (46) zu erfassen.

4. Vorrichtung nach Anspruch 2, **dadurch gekennzeichnet, dass** sie aus einem Tablet besteht, das ferner ein Kommunikationsmodul (38) zum Übertragen der erstellten Baumstruktur an eine Verarbeitungseinheit enthält, die ein Computerprogramm umfasst, das dazu geeignet ist, den Schaltplan der Anlage zu rekonstruieren, wobei das Tablet ferner einen Speicher enthält, der ein Computerprogramm mit Anweisungen zum Ausführen der Verfahrensschritte nach Anspruch 1 umfasst.

5. Computerprogramm, das auf einem Aufzeichnungsmedium gespeichert ist und Anweisungen umfasst, welche die Vorrichtung nach Anspruch 2 dazu bringen, die Verfahrensschritte nach Anspruch 1 auszuführen.

## Claims

1. Method for reconstituting a diagram of an electrical installation comprising a plurality of electrical elements connected to a source of power via protective elements arranged in an electrical panel, **characterized in that** it comprises the following steps:
automatically identifying the wired electrical elements of the installation by image recognition using a photo of the electrical panel,
automatically determining by means of a calculation module (36) the tree structure of the electrical connections of the elements identified and the position of each element in said tree structure,
deducing an electrical diagram of the installation using the tree structure of the electrical connections and the position of each element in said tree structure,
the determination of the tree structure of the electrical connections and of the position of each element in said tree structure comprising the following steps:
locating at least one output terminal (48) and at least one input terminal (50) on each element identified,
verifying the electrical continuity between the output terminal (48) of the first element identified and the input terminal (50) of the second element identified by a detection of a current injected on the output terminal (48) of the first element,
determining the relative position of the second element with respect to the first element by a current measurement at a test point located downstream of the output terminal (48) of the first element.

2. Apparatus for reconstituting a diagram of an electrical installation comprising a plurality of electrical elements connected to a power source via protective elements arranged in an electrical panel, **characterised in that** it comprises:
an image capturing unit (30),
an image processing unit (32) adapted for identifying the wired electrical elements of the installation using an image of the electrical panel delivered by the image capturing unit (30),
a test module (34) adapted for verifying the electrical continuity between the output of a first element identified and the input of a second element identified and for determining the relative position of the second element with respect to the first element,
a calculation module (36) adapted for automatically determining the tree structure of the electrical connections of the elements identified and the position of each element in said tree structure and for generating an electrical diagram of the installation using the determined tree structure,
and **in that** the test module (34) comprises a current generator capable to inject a direct current Idc or an alternating current lac on the output terminal (48) of the first element identified on the electrical panel, a voltmeter (49), a first ammeter (42), and a second ammeter (44).

3. Test module (34) configured for verifying the electrical continuity between the output of a first element identified and the input of a second element identified in order to determine the relative position of the second element with respect to the first element in an electrical installation comprising a plurality of electrical elements connected to a power source via protective elements arranged in an electrical panel, said test module being integrable in an apparatus for reconstituting a diagram of an electrical installation according to claim 2, the test module comprising a current generator capable to inject a direct current Idc or an alternating current lac on the output terminal (48) of the first element identified on the electrical panel, a voltmeter (49) capable to measure the voltage at a test point (46) located downstream of the output terminal (48) of the first element and the input terminal (50) of the second element identified, a first ammeter (42) capable to detect the presence of a direct or alternating current at the output of the test module, and a second ammeter (44) capable to detect the presence of a direct or alternating current at the test point (46).

4. Apparatus according to claim 2, **characterized in that** it is made of a tablet which further comprises a communication module (38) intended for transmitting the generated tree structure to a processing unit that comprises a computer program capable to reconstruct the electrical diagram of the installation, the tablet further comprising a memory comprising a computer program containing instructions in order to implement the steps of the method according to claim 1.

5. Computer program stored on a recording medium and comprising instructions that cause the apparatus according to claim 2 to implement the steps of the method according to claim 1.
